# EUROPEAN PATENT SPECIFICATION

(11) **EP 3 841 644 B1**
(45) Date of publication and mention of the grant of the patent: **05.10.2022**
(21) Application number: 19774177.0
(22) Date of filing: 20.08.2019
(51) Int. Cl.: H02B 1/36

(54) **MODULAR CENTRAL UNIT FOR POWERING AND CONTROLLING ELECTRIC MOTORS REMOTELY**
MODULARE ZENTRALEINHEIT FÜR DIE FERNSTEUERUNG VON ELEKTRISCHEN MOTOREN
UNITÉ MODULAIRE DE COMMANDE DE MOTEURS À DISTANCE

(30) Priority: 21.08.2018 IT 201800008139
(43) Date of publication of application: 30.06.2021
(73) Proprietor: Lafer S.r.l., 36040 Meledo Di Sarego (VI) (IT)
(72) Inventor: GONELLA, Giampaolo, 36040 Brendola (VI) (IT)
(74) Representative: Bonini, Ercole
(86) International application number: PCT/IB2019/057006
(87) International publication number: WO 2020/039345

(56) References cited:
- WO-A1-2011/000838
- WO-A1-2015/044053
- US-A1- 2008 023 211

## Description

The invention concerns a modular central unit designed to remotely power and control the electric motors that operate machines and/or systems.

It is known that the drive motors of machines and systems, especially in large plants, are frequently powered and controlled by means of remote centralized systems that are usually designated by the acronym MCC, meaning "Motor Control Center".

These centralized systems use a plurality of central units that are housed in appropriate electric cabinets installed in remote positions with respect to the motors of the machinery that they are intended to power and to control. Embodiments are known in which each central unit comprises a frame, configured in the shape of a drawer, which can be slided into and out of a corresponding electric cabinet that is structured in such a way as to accommodate a plurality of drawers.

The electric cabinet is arranged in proximity to the electric power supply network, which comprises a plurality of metal bars to which the central units are connected when the drawer where each of them is accommodated is inserted in the electric cabinet.

More specifically, each central unit comprises:
- a disconnector provided with connection means for connection to the metal bars;
- a switch electrically connected to the disconnector, from which the power supply cables of the respective motor and of any auxiliary electric devices for the control of the motor itself branch off;
- a drive unit for the disconnector and the switch, accessible from the outside through manoeuvring means placed at the disposal of an operator.

More specifically, the drive unit can be accessed from the external front side of the drawer through manoeuvring means that allow an operator to operate the disconnector and the switch to supply power to or disconnect power from the respective users.

As already explained, the supporting structure with all the central units associated with it is installed in a remote position with respect to the motors and this allows the operating point for the control of all the motors making up the system to be concentrated in a single area.

Furthermore, in case of failure of the central unit, the operator replaces it by performing the following operations:
- opening the switch;
- uncoupling the disconnector from the metal bars;
- withdrawing the faulty central unit from the supporting structure;
- replacing the faulty central unit with a spare one;
- coupling the disconnector with the metal bars;
- closing the switch.

In this way, the operating conditions of the motor and therefore of the system or the machine to which the motor belongs are restored almost immediately and the faulty central unit can be checked in a lab and repaired at a later moment.

In the central units available on the market, independently of their construction structure, the drive unit is usually provided with convenient safety devices suited to guarantee that the switch and the disconnector are selectively manoeuvred so that:
- the switch closing manoeuvre can be performed only once the disconnector has been coupled with the metal bars of the electric power supply network;
- the manoeuvre to uncouple the disconnector from the metal bars of the power supply network can be performed only once the switch has been opened.

Central units are known, in which the drive unit and the disconnector constitute a single body, in one block, in which the mechanisms allowing the switch and the disconnector to be selectively manoeuvred are contained.

Said central units are sized for systems in which the values of the current to be interrupted are of the order of 300 A and therefore the disconnector that is used in said central units is oversized if the central unit to which it belongs is used to power loads absorbing current values much lower than 300 A.

A central unit of the type just described above is known from the patent document WO 2011/000838 A1.

It should be considered that the problem of size is not secondary in systems, especially in the case of big plants comprising a large number of motors or a large number of loads to be powered, since in these cases the use of central units that are uselessly oversized involves a waste of space and an unjustified increase in costs.

In these cases, for example to power loads that absorb currents of the order of 63 A, special small sized central units have been developed, which are suited to be accommodated in smaller drawers.

These central units differ from those just described above in that the drive unit with which they are provided manoeuvres only the switch, since the disconnector comprises a plug that is integral with the drawer and is fitted into a corresponding fixed socket electrically connected to the metal bars when the drawer is inserted in the supporting structure.

Obviously, safety means are provided which allow the drawer to be inserted in/extracted from the supporting structure and thus the plug and the related socket to be coupled/uncoupled only if the switch is respectively open or closed.

Central units of the latter type are smaller and less expensive than the central units described above and suited to interrupt currents of the order of 300 A, therefore they are much appreciated by users.

However, this involves the drawback of higher costs for the manufacturers, who need to construct and manage central units of two types, completely different from each other.

Furthermore, the central units just described above pose a limitation, which lies in that the disconnector coupling and uncoupling manoeuvres are performed through a mechanical displacement of the drawer, which is carried out manually by the user, and are thus less precise and less controlled manoeuvres compared to the coupling and uncoupling manoeuvres that are performed by acting on the drive unit through a manoeuvring key.

The present invention intends to overcome the drawbacks and the limitations listed above and for this purpose it is a first object of the invention to provide a central unit comprising a switch, a disconnector and a drive unit for the switch and the disconnector, in which the drive unit and the disconnector are configured so that they can be removably connected to each other.

It is another object of the invention to provide a drive unit that can be connected both to a disconnector provided with clamps for connection to metal bars connected to the current distribution network and to a disconnector provided with a plug/socket for connection to a respective socket/plug connected to the metal bars powered by the current distribution network.

The objects mentioned above are achieved by a central unit for remotely powering and controlling electric motors according to the main claim, to which reference is made.

Advantageously, the invention makes it possible to standardize the production of central units by using a single drive unit that can be applied both to disconnectors equipped with clamps and to disconnectors equipped with plug and socket for connection to the metal bars connected to the electric power supply network.

Furthermore, advantageously, for safety purposes, the invention makes it possible to control the disconnector with no need to manually displace the drawer for connection/disconnection to/from the power supply network.

The objects and advantages listed above are achieved by the central unit according to the invention, which is described here below only by way of nonlimiting example, with reference to the attached drawings, wherein:
- Figure 1 shows an axonometric view of the central unit that is the subject of the invention;
- Figure 2 shows an exploded view of the central unit of Figure 1;
- Figure 3 shows an enlarged view of a detail of Figure 1;
- Figure 4 shows an exploded view of the detail of Figure 3;

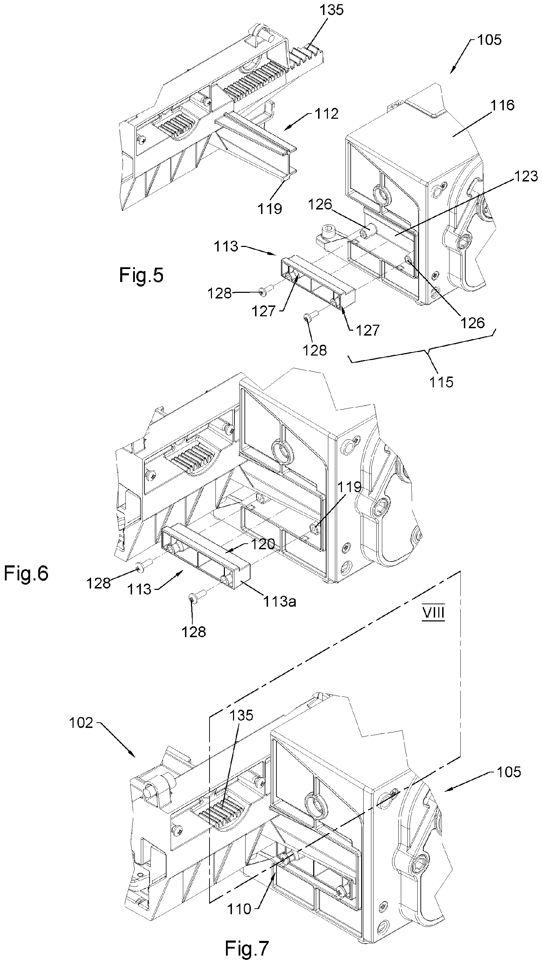

- Figure 5 shows an enlarged detail of Figure 4;
- Figures 6 and 7 show enlarged details of Figure 3;

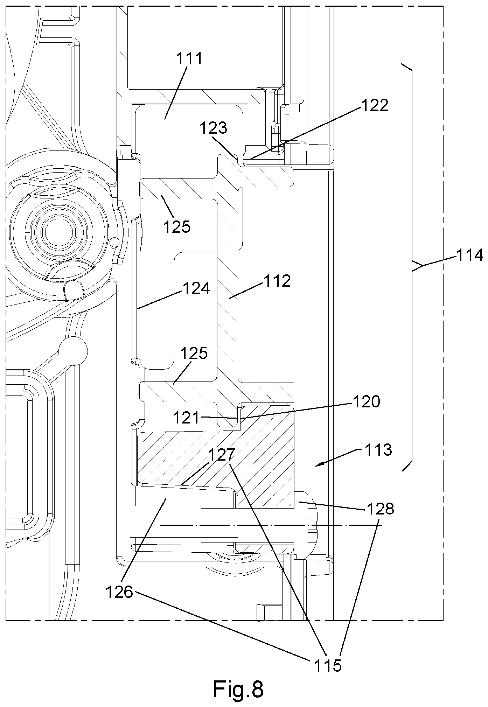

- Figure 8 shows a sectional view of the detail of Figure 7 according to section plane VIII;

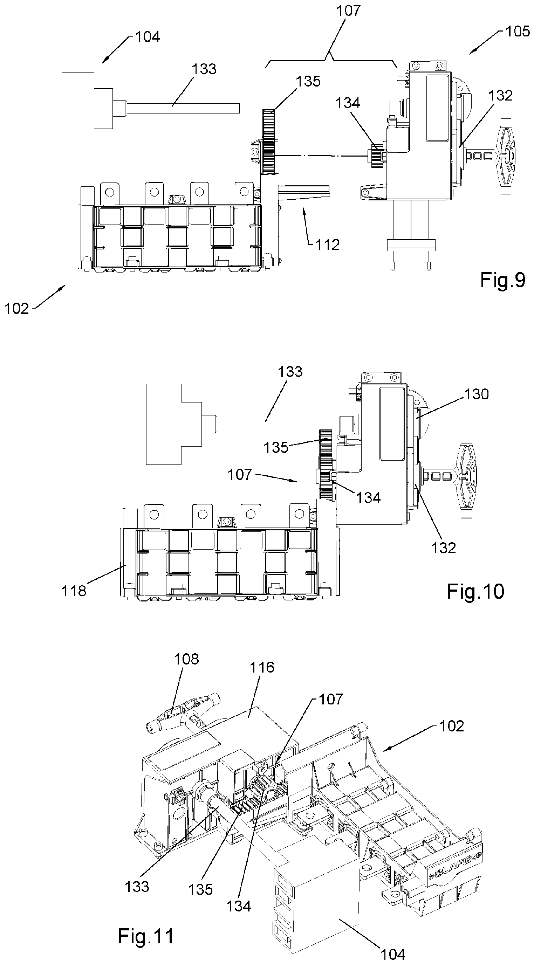

- Figure 9 shows a top view of Figure 4;
- Figure 10 shows a view of Figure 9 after assembly;
- Figure 11 shows an axonometric view of Figure 10;
- Figure 12 shows an axonometric view of a variant embodiment of the central unit that is the subject of the invention;
- Figure 13 shows an exploded view of the central unit of Figure 12;
- Figure 14 shows an enlarged detail of Figure 12;
- Figure 15 shows an exploded view of Figure 14;

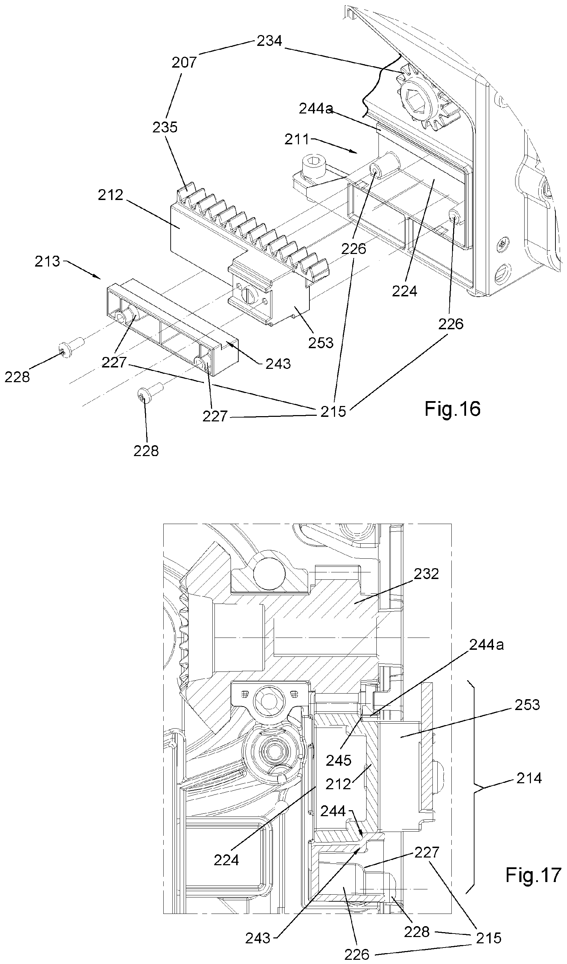

- Figure 16 shows an enlarged detail of Figure 15;
- Figure 17 shows a sectional view of Figure 13 according to section plane XVII - XVII.

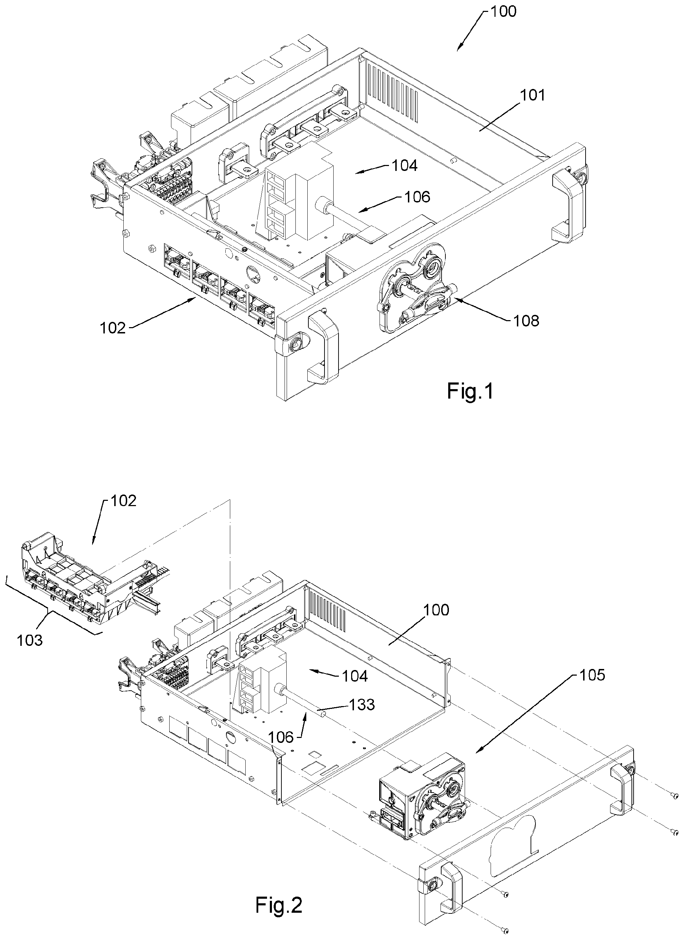

The central unit that is the subject of the invention is represented in an assembled axonometric view and in an exploded axonometric view in Figures 1 and 2, respectively, where it is indicated as a whole by **100.**

It is configured to be inserted in a frame **101** which can be removably associated with a supporting structure, not represented in the figures, which is substantially configured as a reticulated structure suited to accommodate a plurality of frames.

The central unit **100** comprises a disconnector **102** provided with connection elements **103** for connection to an electric power supply network, a switch **104** that can be electrically connected, through electric conductors not represented herein, to the connection elements **103** of the disconnector **102** and to an electric motor to be controlled, not represented, too, and a drive unit **105** for the disconnector **102** and the switch **104.**

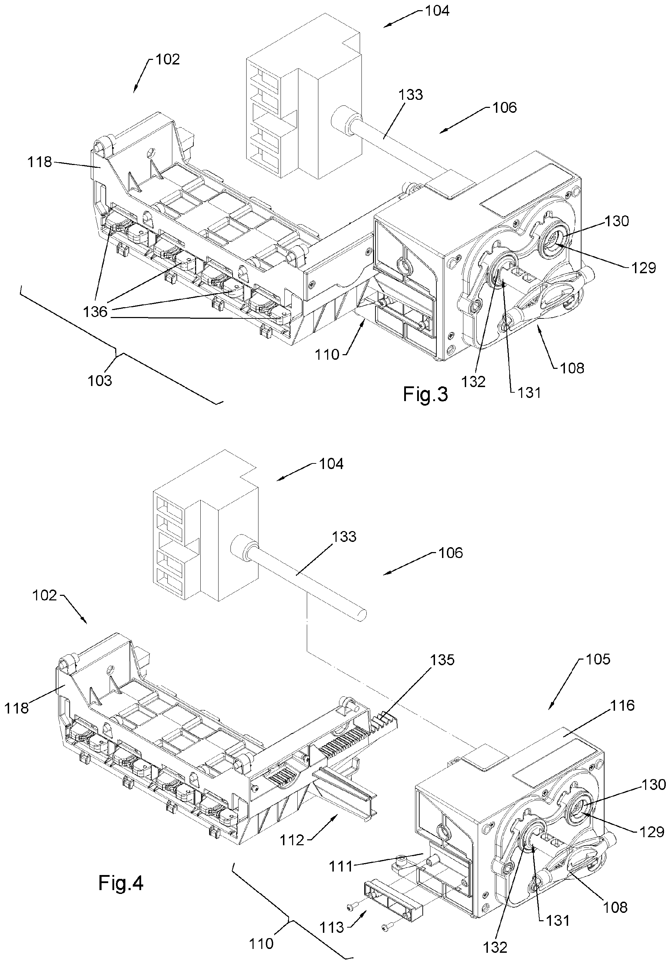

More specifically, with reference to Figures 3 and 4, the drive unit **105** comprises first drive means **106** for the switch **104** and second drive means **107** for the disconnector **102,** especially visible in Figures from 9 to 11 and described in greater detail below, which can be accessed by an operator through a single manoeuvring handle **108** suited to be removably inserted in the drive unit **105** itself.

According to the invention, with special reference to Figures from 5 to 8, the disconnector **102** and the drive unit **105** are distinct from each other, are independent of each other and are removably connected to each other through a connection unit **110** comprising: a shaped housing **111** belonging to the drive unit **105,** a shaped projection **112** belonging to the disconnector **102** and configured to be accommodated in the shaped housing **111,** and a shaped insert **113** configured to be inserted in the shaped housing **111** and to be placed in contact with the shaped projection **112** when this is accommodated in the shaped housing **111,** counteracting means **114** being provided which belong to the shaped housing **111,** to the shaped projection **112** and to the shaped insert **113** and which are configured to mutually cooperate and to constrain the shaped projection **112** in the shaped housing **111** when locking means **115** fix the shaped insert **113** in the shaped housing **111.**

As to the drive unit **105,** it can be observed that it comprises a shaped casing **116** in which the shaped housing **111** is obtained and which is connected to the first drive means **106** of the switch **104** and to the second drive means **107** of the disconnector **102** which, as already explained, are described in greater detail below.

As to the disconnector **102,** instead, it can be observed that it comprises a shaped case **118** which is provided with the shaped projection **112** and which houses the elements **103** for connection to the electric network, said connection elements being known per se and comprising a plurality of connection clamps **136** configured to connect conductor bars which are electrically connected to the electric power supply network and are not represented herein.

The projection **112** protrudes from the shaped case **118** and is accommodated in the shaped housing **111** together with the shaped insert **113** that allows it to be constrained in the shaped housing **111** in a stable but removable manner when the locking means **115** fix the shaped insert **113** in the shaped housing **111.**

In particular, the counteracting means **114** are shown in detail in Figures from 5 to 8, where it can be observed that they comprise a first stop pawl **119** which belongs to the end of the shaped projection **112** and is configured to be placed into contact with a corresponding end **113a** of the shaped insert **113.**

The counteracting means **114** comprise also a second stop pawl **120** that extends along the shaped insert **113** and is configured to be placed into contact with a corresponding first longitudinal housing **121** obtained along the shaped projection **112.**

The counteracting means **114** furthermore comprise a third stop pawl **122** that delimits the shaped housing **111** longitudinally and is configured to cooperate with a corresponding second longitudinal housing **123** obtained along the shaped projection **112** and arranged opposite the first longitudinal housing **121.**

Finally, the counteracting means **114** comprise also the bottom wall **124** of the shaped housing **111** which is placed into contact with two longitudinal ribs **125** that are parallel to each other and belong to the shaped projection **112.**

As to the locking means **115** designed to lock the shaped insert **113** in the shaped housing **111,** they comprise two holed pins **126** projecting from the bottom wall **124** of the shaped housing **111** and two holed housings **127** belonging to the shaped insert **113** and configured to accommodate the holed pins **126** when the shaped insert **113** is introduced in the shaped housing **111.** The shaped insert **113** is then fixed in the shaped housing **111** through screws **128** that are screwed into the holes of the respective holed pins **126** and holed housings **127.**

Obviously, in other embodiments the holed pins **126** and the holed housings **127** can be present in a number different from two.

In order to allow the drive unit **105** to be manoeuvred in the shaped body **116,** a first through opening **129** is provided, which is associated with a first revolving bushing **130** connected to the first drive means **106** of the switch **104** and configured to accommodate the manoeuvring handle **108** inserted therein. As to the first drive means **106** of the switch **104,** they can be seen in greater detail in Figures from 9 to 11 and comprise a manoeuvring shaft **133** which connects the first revolving bushing **130** to the switch **104.**

The shaped body **116** is also provided with a second through opening **131** which is associated with a second revolving bushing **132** that is connected to the second drive means **107** of the disconnector **102** and is also configured to accommodate the manoeuvring handle **108** inserted therein.

As to the second drive means **107** of the disconnector **102,** they are visible in Figures from 9 to 11, too, and comprise a pinion **134** associated with the second revolving bushing **132** and configured to mesh with a rack **135** which is connected to the elements **103** for connection to the electric power supply network and is slidingly associated with the shaped case **118** that encloses the disconnector **102.**

Selective closing means not represented herein are also provided, which are designed to close the through openings **129** and **131** and are configured in such a way as to close the second through opening **131** and prevent the disconnector **102** from being manoeuvred when the first through opening **129** is open and to close the first through opening **129** and prevent the switch **104** from being manoeuvred when the second through opening **131** is open.

It should be noted that the selective closing means designed to close the through openings **129** and **131** and the respective drive means are not described herein, since they can be carried out in a plurality of different embodiments, some of which are known per se.

More specifically, the selective closing means of the present invention are the same that belong to the central unit described in the patent document PCT/EP 2010/059220 filed in the name of the same applicant that is filing the present patent.

Consequently, their embodiment is completely irrelevant for the purpose of functionality and for the achievement of the objects set for the central unit of the invention.

A variant embodiment of the central unit of the invention, indicated as a whole by **200,** is represented in Figures from 12 to 17 and differs from the central unit **100** just described above only in that it comprises a disconnector, indicated as a whole by **202,** whose size is smaller than that of the disconnector **102** just described above.

The central unit **200** is accommodated in a frame **201** and comprises a disconnector **202** provided with connection elements **203** for connection to an electric power supply network, a switch **204** electrically connected to the connection elements **203** and to an electric motor, not represented herein, and a drive unit **205** for the switch **204** and the disconnector **202.**

The drive unit **205** comprises a shaped casing **216** which houses the first drive means **206** of the switch **204** and the second drive means **207** of the disconnector **202** which are described in detail below and can be accessed by an operator through a single removable manoeuvring handle **208.**

Even in this variant solution, the disconnector **202** and the drive unit **205** are distinct from each other, independent and removably connected to each other through a connection unit **210** that comprises a shaped housing **211** belonging to the drive unit **205,** a shaped projection **212** belonging to the disconnector **202** and configured to be accommodated in the shaped housing **211** and a shaped insert **213** configured to be inserted in the shaped housing **211** and to be placed in contact with the shaped projection **212** in order to constrain it when this is accommodated in the shaped housing **211.**

For this purpose, with special reference to Figures from 14 to 17, there are counteracting means **214** belonging to the shaped housing **211,** to the shaped projection **212** and to the shaped insert **213,** which are configured to mutually cooperate and to constrain the shaped projection **212** in the shaped housing **211** when the locking means **215** fix the shaped insert **213** in the shaped housing **211.**

More specifically, the counteracting means **214** comprise a first stop pawl **243** that extends along the shaped insert **213** and is configured to be placed into contact with a corresponding first longitudinal housing **244** obtained along the shaped projection **212.**

The counteracting means **214** comprise also a second stop pawl **244a** that extends longitudinally along the shaped housing **211** and is configured to be placed into contact with a corresponding second longitudinal housing **245** obtained along the shaped projection **212** and located opposite the first longitudinal housing **244.**

The counteracting means **214** furthermore comprise the bottom wall **224** of the shaped housing **211** that cooperates with the shaped projection **212.** Analogously to what happens with the variant embodiment previously described above, the locking means **215** designed to lock the shaped insert **213** in the shaped housing **211** comprise two holed pins **226** projecting from the bottom wall **224** of the shaped housing **211** and two holed housings **227** which belong to the shaped insert **213** and are configured to accommodate the holed pins **226** when the shaped insert **213** is inserted in the shaped housing **211.**

The shaped insert **213** is then fixed in the shaped housing **211** through screws **228** that are screwed into the holes of the corresponding holed pins **226** and holed housings **227.**

The drive unit **205,** as already explained, comprises a shaped casing **216** in which the shaped housing **211** is obtained and which is connected to the first drive means **206** of the switch **204** and to the second drive means **207** of the disconnector **202** that are described here below.

As to the disconnector **202,** it comprises a manoeuvring rod **240** which is slidingly associated with the frame **201** and is provided with a first end **241** that supports the connection elements **203** for connection to the electric network and with a second end **242** provided with the shaped projection **212.**

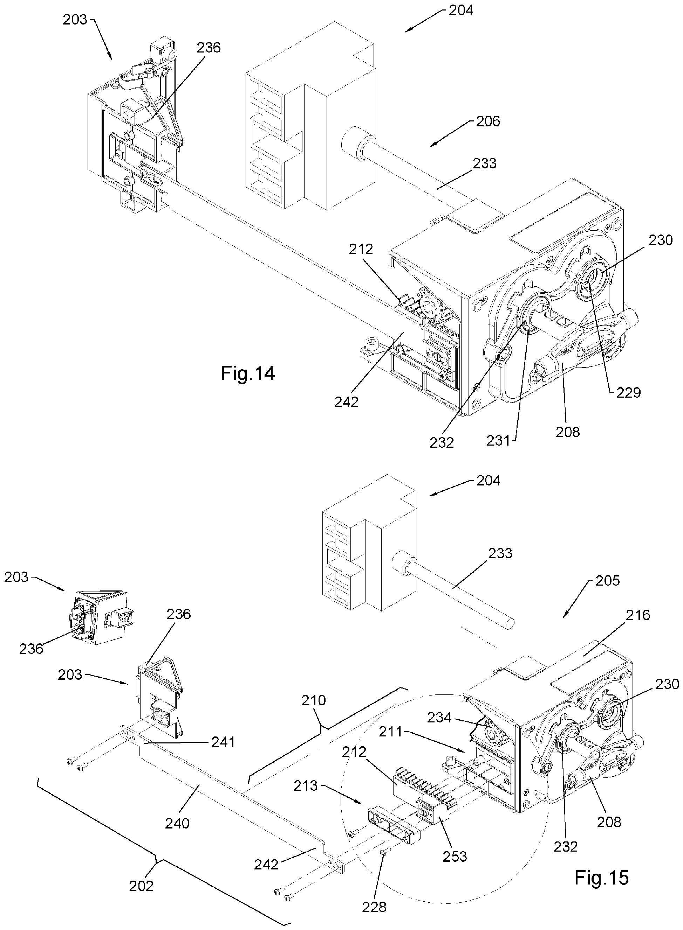

More specifically, as can be observed in Figures 14 and 15, the shaped projection **212** is removably associated with the second end **242** of the manoeuvring rod **240** through a fixing block **253** belonging to the same shaped projection **212.**

Furthermore, the counteracting means **214** belonging to the shaped housing **211,** to the shaped projection **212** and to the shaped insert **213** are configured to slidingly constrain the shaped projection **212** in the shaped housing **211** when the locking means **215** fix the shaped insert **213** in the shaped housing **211.**

As to the locking means **215,** they comprise two holed pins **226** projecting from the bottom wall **223** of the shaped housing **211** and two holed housings **227** belonging to the shaped insert **213** and configured to accommodate the holed pins **226** when the shaped insert **213** is introduced in the shaped housing **211.** The shaped insert **213** is then fixed in the shaped housing **211** through screws **228** that are screwed into the holes of the corresponding holed pins **226** and holed housings **227.**

In the shaped casing **216** there is a first through opening **229** provided with a first revolving bushing **230** that is configured to accommodate the manoeuvring handle **208** inserted therein and is connected to the first drive means **206** of the switch **204.**

Also in this variant solution, the first drive means **206** of the switch **204** comprise a manoeuvring shaft **233** that connects the first revolving bushing **230** to the switch **204.**

There is also a second through opening **231** provided with a second revolving bushing **232** which is configured to accommodate the manoeuvring handle **208** inserted therein and is connected to the second drive means **207** of the disconnector **202.**

In the embodiment described herein, and differently from what happens in the embodiment previously described, the second drive means **207** of the disconnector **202** comprise a pinion **234** that is associated with the second revolving bushing **232** and meshes with a rack **235** that belongs to the shaped projection **212.**

Finally, also in the present variant embodiment there are selective closing means designed to close the through openings **229, 231** and having the same functions as the selective closing means that have been described with reference to the embodiment of the central unit previously illustrated. Therefore, when the manoeuvring handle **208** sets the second revolving bushing **232** and thus also the pinion **234** rotating, the latter causes the rack **235** to move and thus the shaped projection **212** to slide along the shaped housing **211.**

In this way, the disconnector **202** is operated and consequently the manoeuvring rod **240** with which it is provided is moved, wherein said manoeuvring rod connects the connection elements **203** fixed to its first end **241** to the electric power supply network.

More specifically, the connection elements **203** comprise a multipole socket or a multipole plug **236** configured to be coupled with a corresponding multipole plug or multipole socket, not represented, connected to the electric power supply network.

Operatively, in the case of systems in which the current to be interrupted is of the order of 300 A, these use the central unit of the invention indicated as a whole by **100** and represented in Figures 1 and 2, which is housed in the frame **101.**

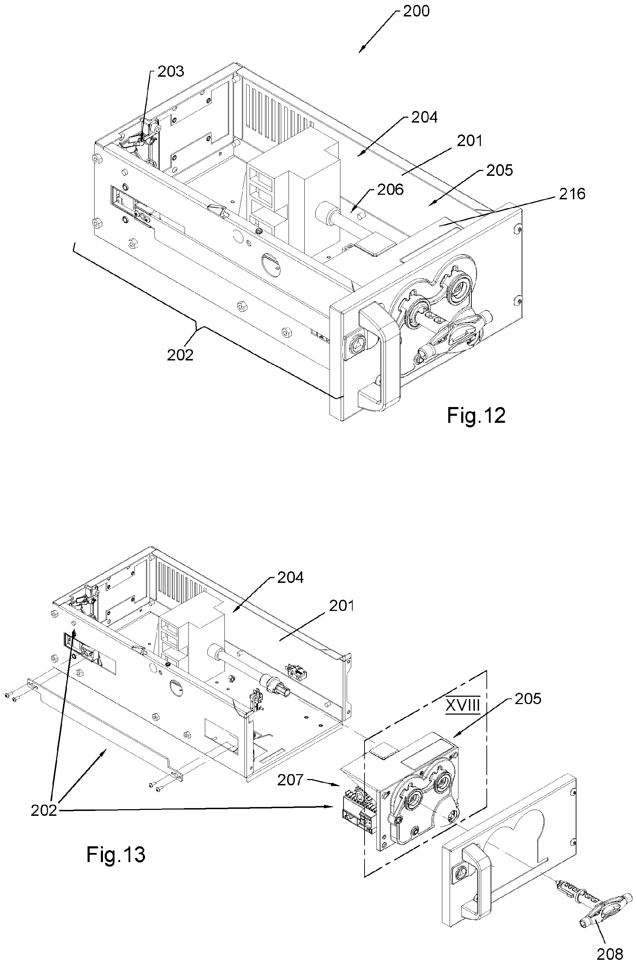

Vice versa, in the case of systems in which the current to be interrupted is of the order of 30 A or less, it is preferable to use the construction variant of the central unit of the invention indicated as a whole by **200** and represented in Figures 12 and 13, which is housed in the frame **201,** which is smaller than the frame **101.**

This is possible since, in line with the set objects, the drive unit and the disconnector are removably connected to each other through a connection unit that makes it possible to use the same drive unit and connect it to the two different disconnectors.

Advantageously, in this way the manufacturer benefits from a higher standardisation of the product and from savings in the management of the spare parts stored in the warehouse.

Furthermore, to advantage, the user, being able to choose from among central units of different sizes according to the conditions of use, can obtain significant reductions in volumes and costs, especially in the case of systems that use a large number of motors with different powers.

During execution, the central unit that is the subject of the invention can be subjected to modifications and variants that are not described herein and not represented in the drawings that accompany the present patent.

It is understood that if said modifications and variants fall within the scope of the following claims, they must certainly be considered protected by the present patent.

## Claims

1. Central unit (100; 200) for powering and controlling electric motors remotely, configured to be accommodated in a frame (101; 201) suited to be removably associated with a supporting structure, said central unit (100; 200) comprising:
- a disconnector (102; 202) comprising connection elements (103; 203) for connection to an electric power supply network;
- a switch (104; 204) electrically connected to said connection elements (103; 203) and connectable to an electric motor;
- a drive unit (105; 205) comprising first drive means (106; 206) for said switch (104; 204) and second drive means (107; 207) for said disconnector (102; 202), which can be accessed by an operator through a single removable manoeuvring handle (108; 208),
**characterized in that** said drive unit (105; 205) comprises a shaped housing (111; 211) and said disconnector (102; 202) comprises a shaped projection (112; 212) configured to be accommodated in said shaped housing (111; 211), wherein a shaped insert (113; 213) is provided, which is configured to be introduced in said shaped housing (111; 211) and to be placed in contact with said shaped projection (112; 212) when said shaped projection (112; 212) is accommodated in said shaped housing (111; 211), and wherein counteracting means (114; 214) are also provided, which belong to said shaped housing (111; 211), to said shaped projection (112; 212) and to said shaped insert (113; 213) and are configured to mutually cooperate and constrain said shaped projection (112; 212) in said shaped housing (111; 211) when locking means (115; 215) comprised by the central unit (100; 200) fix said shaped insert (113; 213) in said shaped housing (111; 211).

2. Central unit (100) according to claim 1, **characterized in that:**
- said drive unit (105) comprises a shaped casing (116) in which said shaped housing (111) is obtained and which is connected to said first drive means (106) of said switch (104) and said second drive means (107) of said disconnector (102);
and **in that**:
- said disconnector (102) comprises a shaped case (118) provided with said shaped projection (112) and housing said connection elements (103) for connection to said electric network,
wherein said shaped projection (112) protrudes from said shaped case (118) and said counteracting means (114) are configured to fix said shaped projection (112) in said shaped housing (111) in a stable but removable manner when said locking means (115) fix said shaped insert (113) in said shaped housing (111).

3. Central unit (100) according to any of the preceding claims, **characterized in that** said counteracting means (114) comprise:
- a first stop pawl (119) belonging to the end of said shaped projection (112) and configured to be placed into contact with a corresponding end (113a) of said shaped insert (113);
- a second stop pawl (120) that extends along said shaped insert (113) and is configured to be placed into contact with a corresponding first longitudinal housing (121) obtained along said shaped projection (112);
- a third stop pawl (122) that delimits said shaped housing (111) longitudinally and is configured to cooperate with a corresponding second longitudinal housing (123) obtained along said shaped projection (112) and arranged opposite said first longitudinal housing (121);
- the bottom wall (124) of said shaped housing (111) which is placed into contact with two longitudinal ribs (125) parallel to each other and belonging to said shaped projection (112).

4. Central unit (100) according to any of the preceding claims, **characterized in that** said locking means (115) comprise:
- one or more holed pins (126) present in said shaped housing (111);
- one or more holed housings (127) belonging to said shaped insert (113) and configured to accommodate said holed pins (126) when said shaped insert (113) is introduced in said shaped housing (111);
- two or more screws (128) suited to be screwed into said holes of said holed pins (126) and of said holed housings (127) to removably fix said shaped insert (113) in said shaped housing (111).

5. Central unit (100) according to any of the preceding claims from 2 to 4, **characterized in that** in said shaped casing (116) there are:
- a first through opening (129) associated with a first revolving bushing (130) connected to said first drive means (106) of said switch (104) and configured to accommodate said manoeuvring handle (108) inserted therein;
- a second through opening (131) associated with a second revolving bushing (132) connected to said second drive means (107) of said disconnector (102) and configured to accommodate said manoeuvring handle (108) inserted therein,
wherein selective closing means are provided, which are suited to selectively close said through openings (129; 131) and configured to close said second through opening (131) and prevent said disconnector (102) from being manoeuvred when said first through opening (129) is open and to close said first through opening (129) and prevent said switch (104) from being manoeuvred when said second through opening (131) is open.

6. Central unit (100) according to claim 5, **characterized in that** said first drive means (106) of said switch (104) comprise a manoeuvring shaft (133) which connects said first revolving bushing (130) to said switch (104).

7. Central unit (100) according to any of claims 5 or 6, **characterized in that** said second drive means (107) comprise a pinion (134) associated with said second revolving bushing (132) and configured to mesh with a rack (135) connected to said connection elements (103) for connection to said electric power supply network and slidingly associated with said shaped case (118) that encloses said connection elements (103).

8. Central unit (100) according to any of the preceding claims, **characterized in that** said connection elements (103) comprise a plurality of connection clamps (136) configured to connect conductor bars (137) electrically connected to said electric power supply network.

9. Central unit (200) according to claim 1, **characterized in that:**
- said drive unit (205) comprises a shaped casing (216) in which said shaped housing (211) is obtained and which is connected to said first drive means (206) of said switch (204) and said second drive means (207) of said disconnector (202);
- said disconnector (202) comprises a manoeuvring rod (240) configured in such a way that it is slidingly associated with said frame (201) and having a first end (241) that supports said connection elements (203) for connection to said electric network and a second end (242) provided with said shaped projection (212),
said shaped projection (212) being removably associated with said second end (242) of said manoeuvring rod (240) through a fixing block (253) belonging to said shaped projection (212) and said counteracting means (214) belonging to said shaped housing (211), to said shaped projection (212) and to said shaped insert (213) being configured to slidingly constrain said shaped projection (212) in said shaped housing (211) when said locking means (215) fix said shaped insert (213) in said shaped housing (211).

10. Central unit (200) according to any of claims 1 or 9, **characterized in that** said counteracting means (214) comprise:
- a first stop pawl (243) extending along said shaped insert (213) and configured to be placed into contact with a corresponding first longitudinal housing (244) obtained along said shaped projection (212);
- a second stop pawl (244a) extending longitudinally along said shaped housing (211) and configured to be placed into contact with a corresponding second longitudinal housing (245) obtained along said shaped projection (212) and located opposite said first longitudinal housing (244);
- the bottom wall (224) of said shaped housing (211) cooperating with said shaped projection (212).

11. Central unit (200) according to any of claims 1, 9 or 10, **characterized in that** said locking means (215) comprise:
- one or more holed pins (226) present in said shaped housing (211);
- one or more holed housings (227) belonging to said shaped insert (213) and configured to accommodate said holed pins (226) when said shaped insert (213) is introduced in said shaped housing (211);
- two or more screws (228) suited to be screwed into said holes of said holed pins (226) and of said holed housings (227) to removably fix said shaped insert (213) to said shaped housing (211).

12. Central unit (200) according to any of claims 1 or from 9 to 11, **characterized in that** in said shaped casing (216) there are:
- a first through opening (229) provided with a first revolving bushing (230) connected to said first drive means (206) of said switch (204) and configured to accommodate said manoeuvring handle (208) inserted therein;
- a second through opening (231) provided with a second revolving bushing (232) connected to said second drive means (207) of said disconnector (202) and configured to accommodate said manoeuvring handle (208) inserted therein,
wherein selective closing means are provided, which are suited to selectively close said through openings (229; 231) and configured to close said second through opening (231) and prevent said disconnector (202) from being manoeuvred when said first through opening (229) is open and to close said first through opening (229) and prevent said switch (204) from being manoeuvred when said second through opening (231) is open.

13. Central unit (200) according to claim 12, **characterized in that** said first drive means (206) of said switch (204) comprise a manoeuvring shaft (233) connecting said first revolving bushing (230) to said switch (204).

14. Central unit (200) according to claim 12 or 13, **characterized in that** said second drive means (207) comprise a pinion (234) associated with said second revolving bushing (232) and configured to mesh with a rack (235) belonging to said shaped projection (212), said pinion (234) and said rack (235) being configured to slidingly move said shaped projection (212) along said shaped housing (211).

15. Central unit (200) according to any of claims 1 or from 9 to 14, **characterized in that** said connection elements (203) comprise a multipole plug/multipole socket (236) configured to be coupled with a corresponding multipole socket/multipole plug electrically connected to said electric power supply network.

## Patentansprüche

1. Zentraleinheit (100; 200) zum Versorgen und Steuern von Elektromotoren auf Distanz, die so gestaltet ist, dass sie in einem Rahmen (101; 201) untergebracht werden kann, der geeignet ist, lösbar mit einer Trägerstruktur verbunden zu werden, wobei die besagte Zentraleinheit (100; 200) Folgendes umfasst:
- einen Trennschalter (102; 202) mit Verbindungselementen (103; 203) zum Anschluss an ein elektrisches Energieversorgungsnetz;
- einen Schalter (104; 204), der elektrisch mit den besagten Verbindungselementen (103; 203) verbunden ist und an einen Elektromotor angeschlossen werden kann;
- eine Antriebseinheit (105; 205), die erste Antriebsmittel (106; 206) für den besagten Schalter (104; 204) und zweite Antriebsmittel (107; 207) für den besagten Trennschalter (102; 202) umfasst, auf die eine Bedienperson über einen einzigen abnehmbaren Betätigungsgriff (108; 208) zugreifen kann,
**dadurch gekennzeichnet, dass** die besagte Antriebseinheit (105; 205) ein Formgehäuse (111; 211) umfasst und der besagte Trennschalter (102; 202) einen Formvorsprung (112; 212) umfasst, der zur Aufnahme in dem besagten Formgehäuse (111; 211) gestaltet ist, wobei ein Formeinsatz (113; 213) vorgesehen ist, der zur Einführung in das besagte Formgehäuse (111; 211) und zur Positionierung in Kontakt mit dem besagten Formvorsprung (112; 212) gestaltet ist, während der besagte Formvorsprung (112; 212) in dem besagten Formgehäuse (111; 211) aufgenommen ist, und wobei auch Gegenwirkungsmittel (114; 214) vorgesehen sind, die zu dem besagten Formgehäuse (111; 211), dem besagten Formvorsprung (112; 212) und dem besagten Formeinsatz (113; 213) gehören und so gestaltet sind, dass sie wechselseitig zusammenwirken und den besagten Formvorsprung (112; 212) in dem besagten Formgehäuse (111; 211) befestigen, wenn Verriegelungsmittel (115; 215), die von der Zentraleinheit (100; 200) umfasst sind, den besagten Formeinsatz (113; 213) in dem besagten Formgehäuse (111; 211) fixieren.

2. Zentraleinheit (100) nach Patentanspruch 1, **dadurch gekennzeichnet, dass:**
- die besagte Antriebseinheit (105) eine Formhülle (116) umfasst, in der das besagte Formgehäuse (111) erhalten wird, und die mit den besagten ersten Antriebsmitteln (106) des besagten Schalters (104) und den besagten zweiten Antriebsmitteln (107) des besagten Trennschalters (102) verbunden ist;
und dadurch, dass:
- der besagte Trennschalter (102) ein Formgehäuse (118) umfasst, das mit dem besagten Formvorsprung (112) versehen ist und die besagten Verbindungselemente (103) zum Anschluss an das besagte elektrische Netz aufnimmt,
wobei der besagte Formvorsprung (112) aus dem besagten Formgehäuse (118) herausragt und die besagten Gegenwirkungsmittel (114) so gestaltet sind, dass sie den besagten Formvorsprung (112) in dem besagten Formgehäuse (111) in einer stabilen, aber entfernbaren Weise fixieren, wenn die besagten Verriegelungsmittel (115) den besagten Formeinsatz (113) in dem besagten Formgehäuse (111) fixieren.

3. Zentraleinheit (100) nach jeglichem der vorhergehenden Patentansprüche, **dadurch gekennzeichnet, dass** die besagten Gegenwirkungsmittel (114) Folgendes umfassen:
- eine erste Sperrklinke (119), die zu dem Ende des besagten Formvorsprungs (112) gehört und so gestaltet ist, dass sie mit einem entsprechenden Ende (113a) des besagten Formeinsatzes (113) in Kontakt gebracht werden kann;
- eine zweite Sperrklinke (120), die sich entlang des besagten Formeinsatzes (113) erstreckt und so gestaltet ist, dass sie in Kontakt mit einem entsprechenden ersten Längsgehäuse (121) gebracht wird, das entlang des besagten Formvorsprungs (112) erhalten wird;
- eine dritte Sperrklinke (122), die das besagte Formgehäuse (111) in Längsrichtung begrenzt und so gestaltet ist, dass sie mit einem entsprechenden zweiten Längsgehäuse (123) zusammenwirkt, das entlang des besagten Formvorsprungs (112) erhalten wird und gegenüber dem besagten ersten Längsgehäuse (121) angeordnet ist;
- die untere Wand (124) des besagten Formgehäuses (111), die mit zwei zueinander parallelen und zu dem besagten Formvorsprung (112) gehörenden Längsrippen (125) in Kontakt steht.

4. Zentraleinheit (100) nach jeglichem der vorhergehenden Patentansprüche, **dadurch gekennzeichnet, dass** die besagten Verriegelungsmittel (115) Folgendes umfassen:
- ein oder mehrere gelochte Stifte (126), die in dem besagten Formgehäuse (111) vorhanden sind;
- ein oder mehrere gelochte Gehäuse (127), die zu dem besagten Formeinsatz (113) gehören und so gestaltet sind, dass sie die gelochten Stifte (126) aufnehmen, wenn der besagte Formeinsatz (113) in das besagte Formgehäuse (111) eingeführt wird;
- zwei oder mehrere Schrauben (128), die geeignet sind, in die Löcher der besagten gelochten Stifte (126) und der besagten gelochten Gehäuse (127) geschraubt zu werden, um den besagten Formeinsatz (113) in dem besagten Formgehäuse (111) lösbar zu befestigen.

5. Zentraleinheit (100) nach jeglichem der vorhergehenden Patentansprüche 2 bis 4, **dadurch gekennzeichnet, dass** in der besagten Formhülle (116) folgende Elemente vorhanden sind:
- eine erste Durchgangsöffnung (129), die mit einer ersten Drehbuchse (130) verbunden ist, die mit den besagten ersten Antriebsmitteln (106) des besagten Schalters (104) verbunden ist und so gestaltet ist, dass sie den darin eingeführten besagten Betätigungsgriff (108) aufnehmen kann;
- eine zweite Durchgangsöffnung (131), die mit einer zweiten Drehbuchse (132) verbunden ist, die mit den besagten zweiten Antriebsmitteln (107) des besagten Trennschalters (102) verbunden ist und so gestaltet ist, dass sie den darin eingeführten besagten Betätigungsgriff (108) aufnehmen kann,
wobei selektive Schließmittel vorgesehen sind, die geeignet sind, die besagten Durchgangsöffnungen (129; 131) selektiv zu schließen, und so gestaltet sind, dass sie die besagte zweite Durchgangsöffnung (131) schließen und verhindern, dass der besagte Trennschalter (102) betätigt wird, wenn die besagte erste Durchgangsöffnung (129) offen ist, und dass sie die besagte erste Durchgangsöffnung (129) schließen und verhindern, dass der besagte Schalter (104) betätigt wird, wenn die besagte zweite Durchgangsöffnung (131) offen ist.

6. Zentraleinheit (100) nach Patentanspruch 5, **dadurch gekennzeichnet, dass** die besagten ersten Antriebsmittel (106) des besagten Schalters (104) eine Betätigungswelle (133) umfassen, die die besagte erste Drehbuchse (130) mit dem besagten Schalter (104) verbindet.

7. Zentraleinheit (100) nach jeglichem der Patentansprüche 5 oder 6, **dadurch gekennzeichnet, dass** die besagten zweiten Antriebsmittel (107) ein Ritzel (134) umfassen, das mit der besagten zweiten Drehbuchse (132) verbunden ist und so gestaltet ist, dass es mit einer Zahnstange (135) in Eingriff kommt, die mit den besagten Verbindungselementen (103) zur Verbindung mit dem besagten elektrischen Stromversorgungsnetz verbunden ist und gleitend mit dem besagten Formgehäuse (118) verbunden ist, das die besagten Verbindungselemente (103) umschließt.

8. Zentraleinheit (100) nach jeglichem der vorhergehenden Patentansprüche, **dadurch gekennzeichnet, dass** die besagten Verbindungselemente (103) eine Vielzahl von Verbindungsklemmen (136) umfassen, die so gestaltet sind, dass sie Leiterschienen (137) verbinden, die elektrisch mit dem besagten elektrischen Stromversorgungsnetz verbunden sind.

9. Zentraleinheit (200) nach Patentanspruch 1, **dadurch gekennzeichnet, dass:**
- die besagte Antriebseinheit (205) eine Formhülle (216) umfasst, in der das besagte Formgehäuse (211) erhalten wird und die mit den besagten ersten Antriebsmitteln (206) des besagten Schalters (204) und den besagten zweiten Antriebsmitteln (207) des besagten Trennschalters (202) verbunden ist;
- der besagte Trennschalter (202) eine Betätigungsstange (240) umfasst, die so gestaltet ist, dass sie gleitend mit dem besagten Rahmen (201) verbunden ist und ein erstes Ende (241), das die besagten Verbindungselemente (203) zum Anschluss an das besagte elektrische Netz trägt, und ein zweites Ende (242) aufweist, das mit dem besagten Formvorsprung (212) versehen ist,
wobei der besagte Formvorsprung (212) durch einen Befestigungsblock (253), der zu dem besagten Formvorsprung (212) gehört, lösbar mit dem besagten zweiten Ende (242) der besagten Betätigungsstange (240) verbunden ist, und die besagten Gegenwirkungsmittel (214), die zu dem besagten Formgehäuse (211), dem besagten Formvorsprung (212) und dem besagten Formeinsatz (213) gehören, so gestaltet sind, dass sie den besagten Formvorsprung (212) gleitend in dem besagten Formgehäuse (211) befestigen, wenn die besagten Verriegelungsmittel (215) den besagten Formeinsatz (213) in dem besagten Formgehäuse (211) fixieren.

10. Zentraleinheit (200) nach jeglichem der Patentansprüche 1 oder 9, **dadurch gekennzeichnet, dass** die besagten Gegenwirkungsmittel (214) folgende Elemente umfassen:
- eine erste Sperrklinke (243), die sich entlang des besagten Formeinsatzes (213) erstreckt und so gestaltet ist, dass sie in Kontakt mit einem entsprechenden ersten Längsgehäuse (244) gebracht wird, das entlang des besagten Formvorsprungs (212) erhalten wird;
- eine zweite Sperrklinke (244a), die sich entlang des besagten Formgehäuses (211) in Längsrichtung erstreckt und so gestaltet ist, dass sie in Kontakt mit einem entsprechenden zweiten Längsgehäuse (245) gebracht wird, das entlang des besagten Formvorsprungs (212) erhalten wird und gegenüber dem besagten ersten Längsgehäuse (244) angeordnet ist;
- die untere Wand (224) des besagten Formgehäuses (211), die mit dem besagten Formvorsprung (212) zusammenwirkt.

11. Zentraleinheit (200) nach jeglichem der Patentansprüche 1, 9 oder 10, **dadurch gekennzeichnet, dass** die besagten Verriegelungsmittel (215) folgende Elemente umfassen:
- ein oder mehrere gelochte Stifte (226), die in dem besagten Formgehäuse (211) vorhanden sind;
- ein oder mehrere gelochte Gehäuse (227), die zu dem besagten Formeinsatz (213) gehören und so gestaltet sind, dass sie die besagten gelochten Stifte (226) aufnehmen, wenn der besagte Formeinsatz (213) in das besagte Formgehäuse (211) eingeführt wird;
- zwei oder mehrere Schrauben (228), die geeignet sind, in die besagten Löcher der besagten gelochten Stifte (226) und der besagten gelochten Gehäuse (227) geschraubt zu werden, um den besagten Formeinsatz (213) in dem besagten Formgehäuse (211) lösbar zu befestigen.

12. Zentraleinheit (200) nach jeglichem der vorhergehenden Patentansprüche 1 oder 9 bis 11, **dadurch gekennzeichnet, dass** in der besagten Formhülle (216) folgende Elemente vorhanden sind:
- eine erste Durchgangsöffnung (229), die mit einer ersten Drehbuchse (230) versehen ist, die mit den besagten ersten Antriebsmitteln (206) des besagten Schalters (204) verbunden ist und so gestaltet ist, dass sie den darin eingeführten besagten Betätigungsgriff (208) aufnehmen kann;
- eine zweite Durchgangsöffnung (231), die mit einer zweiten Drehbuchse (232) versehen ist, die mit den besagten zweiten Antriebsmitteln (207) des besagten Trennschalters (202) verbunden ist und so gestaltet ist, dass sie den darin eingeführten besagten Betätigungsgriff (208) aufnehmen kann,
wobei selektive Schließmittel vorgesehen sind, die geeignet sind, die besagten Durchgangsöffnungen (229; 231) selektiv zu schließen, und so gestaltet sind, dass sie die besagte zweite Durchgangsöffnung (231) schließen und verhindern, dass der besagte Trennschalter (202) betätigt wird, wenn die besagte erste Durchgangsöffnung (229) offen ist, und dass sie die besagte erste Durchgangsöffnung (229) schließen und verhindern, dass der besagte Schalter (204) betätigt wird, wenn die besagte zweite Durchgangsöffnung (231) offen ist.

13. Zentraleinheit (200) nach Patentanspruch 12, **dadurch gekennzeichnet, dass** die besagten ersten Antriebsmittel (206) des besagten Schalters (204) eine Betätigungswelle (233) umfassen, die die besagte erste Drehbuchse (230) mit dem besagten Schalter (204) verbindet.

14. Zentraleinheit (200) nach Patentanspruch 12 oder 13, **dadurch gekennzeichnet, dass** die besagten zweiten Antriebsmittel (207) ein Ritzel (234) umfassen, das der besagten zweiten Drehbuchse (232) zugeordnet und so gestaltet ist, dass es mit einer zu dem besagten Formvorsprung (212) gehörenden Zahnstange (235) in Eingriff steht, wobei das besagte Ritzel (234) und die besagte Zahnstange (235) so gestaltet sind, dass sie den besagten Formvorsprung (212) entlang des besagten Formgehäuses (211) gleitend bewegen.

15. Zentraleinheit (200) nach jeglichem der Patentansprüche 1 oder 9 bis 14, **dadurch gekennzeichnet, dass** die besagten Verbindungselemente (203) einen mehrpoligen Stecker/eine mehrpolige Buchse (236) umfassen, der/die so gestaltet ist, dass er/sie mit einer entsprechenden mehrpoligen Buchse/einem entsprechenden mehrpoligen Stecker gekoppelt werden kann, die/der elektrisch mit dem besagten Stromversorgungsnetz verbunden ist.

## Revendications

1. Unité centrale (100; 200) pour alimenter et commander des moteurs électriques à distance, configurée pour être logée dans un cadre (101; 201) adapté pour être associé de manière amovible à une structure de support, ladite unité centrale (100; 200) comprenant:
- un sectionneur (102; 202) comprenant des éléments de connexion (103; 203) pour la connexion à un réseau d'alimentation électrique;
- un commutateur (104; 204) connecté électriquement auxdits éléments de connexion (103; 203) et pouvant être connecté à un moteur électrique;
- une unité d'entraînement (105; 205) comprenant des premiers moyens d'entraînement (106; 206) pour ledit commutateur (104; 204) et des deuxièmes moyens d'entraînement (107; 207) pour ledit sectionneur (102; 202), auxquels un opérateur peut accéder par l'intermédiaire d'une seule poignée de manœuvre amovible (108; 208),
**caractérisé en ce que** ladite unité d'entraînement (105; 205) comprend un logement galbé (111; 211) et ledit sectionneur (102; 202) comprend une saillie galbée (112; 212) configurée pour être logée dans ledit logement galbé (111; 211), où un insert galbé (113; 213) est prévu, qui est configuré pour être introduit dans ledit logement galbé (111; 211) et pour être mis en contact avec ladite saillie galbée (112; 212) quand ladite saillie galbée (112; 212) est accueillie dans ledit logement galbé (111; 211), et où des moyens de contraste (114; 214) sont également prévus, qui appartiennent audit logement galbé (111; 211), à ladite saillie galbée (112; 212) et audit insert galbé (113; 213) et sont configurés pour coopérer mutuellement et contraindre ladite saillie galbée (112; 212) dans ledit logement galbé (111; 211) quand des moyens de blocage (115; 215) compris dans l'unité centrale (100; 200) fixent ledit insert galbé (113; 213) dans ledit logement galbé (111; 211).

2. Unité centrale (100) selon la revendication 1, **caractérisée en ce que:**
- ladite unité d'entraînement (105) comprend un boîtier galbé (116) dans lequel ledit logement galbé (111) est obtenu et qui est relié auxdits premiers moyens d'entraînement (106) dudit commutateur (104) et auxdits deuxièmes moyens d'entraînement (107) dudit sectionneur (102);
et **en ce que**:
- ledit sectionneur (102) comprend un boîtier galbé (118) pourvu de ladite saillie galbée (112) et logeant lesdits éléments de connexion (103) pour la connexion audit réseau électrique,
où ladite saillie galbée (112) fait saillie dudit boîtier galbé (118) et lesdits moyens de contraste (114) sont configurés pour fixer ladite saillie galbée (112) dans ledit logement galbé (111) d'une manière stable mais amovible quand lesdits moyens de blocage (115) fixent ledit insert galbé (113) dans ledit logement galbé (111).

3. Unité centrale (100) selon l'une quelconque des revendications précédentes, **caractérisée en ce que** lesdits moyens de contraste (114) comprennent:
- un premier cliquet d'arrêt (119) appartenant à l'extrémité de ladite saillie galbée (112) et configuré pour être mis en contact avec une extrémité correspondante (113a) dudit insert galbé (113);
- un deuxième cliquet d'arrêt (120) qui s'étend le long dudit insert galbé (113) et est configuré pour être mis en contact avec un premier logement longitudinal correspondant (121) obtenu le long de ladite saillie galbée (112);
- un troisième cliquet d'arrêt (122) qui délimite ledit logement galbé (111) longitudinalement et est configuré pour coopérer avec un deuxième logement longitudinal correspondant (123) obtenu le long de ladite saillie galbée (112) et disposé en face dudit premier logement longitudinal (121);
- la paroi inférieure (124) dudit logement galbé (111) qui est mise en contact avec deux nervures longitudinales (125) parallèles l'une par rapport à l'autre et appartenant à ladite projection galbée (112).

4. Unité centrale (100) selon l'une quelconque des revendications précédentes, **caractérisée en ce que** lesdits moyens de blocage (115) comprennent:
- un ou plusieurs pivots troués (126) présentes dans ledit logement galbé (111);
- un ou plusieurs logements troués (127) appartenant audit insert galbé (113) et configurés pour recevoir lesdits pivots troués (126) quand ledit insert galbé (113) est introduit dans ledit logement galbé (111);
- deux ou plusieurs vis (128) indiquées pour être vissées dans lesdits trous desdits pivots troués (126) et desdits logements troués (127) pour fixer de manière amovible ledit insert galbé (113) dans ledit logement galbé (111).

5. Unité centrale (100) selon l'une quelconque des revendications précédentes de 2 à 4, **caractérisée en ce que** dans ledit boîtier galbé (116) se trouvent:
- une première ouverture passante (129) associée à une première douille tournante (130) reliée auxdits premiers moyens d'entraînement (106) dudit commutateur (104) et configurée pour recevoir ladite poignée de manœuvre (108) insérée à l'intérieur;
- une deuxième ouverture passante (131) associée à une deuxième douille tournante (132) reliée auxdits deuxièmes moyens d'entraînement (107) dudit sectionneur (102) et configurée pour recevoir ladite poignée de manœuvre (108) insérée à l'intérieur,
où des moyens de fermeture sélectifs sont prévus, qui sont indiqués pour fermer sélectivement lesdites ouvertures passantes (129; 131) et configurés pour fermer ladite deuxième ouverture passante (131) et empêcher que ledit sectionneur (102) soit manœuvré quand ladite première ouverture passante (129) est ouverte et pour fermer ladite première ouverture passante (129) et empêcher que ledit commutateur (104) soit manœuvré quand ladite deuxième ouverture passante (131) est ouverte.

6. Unité centrale (100) selon la revendication 5, **caractérisée en ce que** lesdits premiers moyens d'entraînement (106) dudit commutateur (104) comprennent un arbre de manœuvre (133) qui relie ladite première douille tournante (130) audit commutateur (104).

7. Unité centrale (100) selon l'une quelconque des revendications 5 ou 6, **caractérisée en ce que** lesdits deuxièmes moyens d'entrainement (107) comprennent un pignon (134) associé à ladite deuxième douille tournante (132) et configuré pour s'engrener avec une crémaillère (135) reliée auxdits éléments de connexion (103) pour la connexion audit réseau d'alimentation électrique et associée de manière coulissante audit boîtier galbé (118) qui renferme lesdits éléments de connexion (103).

8. Unité centrale (100) selon l'une quelconque des revendications précédentes, **caractérisée en ce que** lesdits éléments de connexion (103) comprennent une pluralité de pinces de connexion (136) configurées pour connecter des barres conductrices (137) connectées électriquement audit réseau d'alimentation électrique.

9. Unité centrale (200) selon la revendication 1, **caractérisée en ce que:**
- ladite unité d'entraînement (205) comprend un boîtier galbé (216) dans lequel ledit logement galbé (211) est obtenu et qui est relié auxdits premiers moyens d'entraînement (206) dudit commutateur (204) et auxdits deuxièmes moyens d'entraînement (207) dudit sectionneur (202);
- ledit sectionneur (202) comprend une tige de manœuvre (240) configurée de manière à ce qu'elle soit associée de manière coulissante audit cadre (201) et ayant une première extrémité (241) qui supporte lesdits éléments de connexion (203) pour la connexion audit réseau électrique et une deuxième extrémité (242) pourvue de ladite saillie galbée (212),
ladite saillie galbée (212) étant associée de manière amovible à ladite deuxième extrémité (242) de ladite tige de manœuvre (240) par l'intermédiaire d'un bloc de fixation (253) appartenant à ladite saillie galbée (212) et lesdits moyens de contraste (214) appartenant audit logement galbé (211), à ladite saillie galbée (212) et audit insert galbé (213) étant configurés pour contraindre de manière coulissante ladite saillie galbée (212) dans ledit logement galbé (211) quand lesdits moyens de blocage (215) fixent ledit insert galbé (213) dans ledit logement galbé (211).

10. Unité centrale (200) selon l'une quelconque des revendications 1 ou 9, **caractérisée en ce que** lesdits moyens de contraste (214) comprennent:
- un premier cliquet d'arrêt (243) s'étendant le long dudit insert galbé (213) et configuré de manière à être mis en contact avec un premier logement longitudinal correspondant (244) obtenu le long de ladite saillie galbée (212);
- un deuxième cliquet d'arrêt (244a) s'étendant longitudinalement le long dudit logement galbé (211) et configuré de manière à être mis en contact avec un deuxième logement longitudinal correspondant (245) obtenu le long de ladite saillie galbée (212) et disposé opposé dudit premier logement longitudinal (244);
- la paroi inférieure (224) dudit logement galbé (211) coopérant avec ladite saillie galbée (212).

11. Unité centrale (200) selon l'une quelconque des revendications 1, 9 ou 10, **caractérisée en ce que** lesdits moyens de blocage (215) comprennent:
- un ou plusieurs pivots troués (226) présentes dans ledit logement galbé (211);
- un ou plusieurs logements troués (227) appartenant audit insert galbé (213) et configurés pour recevoir lesdits pivots troués (226) quand ledit insert galbé (213) est introduit dans ledit logement galbé (211);
- deux ou plusieurs vis (228) indiquées pour être vissées dans lesdits trous desdits pivots troués (226) et desdits logements troués (227) pour fixer de manière amovible ledit insert galbé (213) audit logement galbé (211).

12. Unité centrale (200) selon l'une quelconque des revendications 1 ou de 9 à 11, **caractérisée en ce que** dans ledit boîtier galbé (216), se trouvent:
- une première ouverture passante (229) pourvue d'une première douille tournante (230) reliée auxdits premiers moyens d'entraînement (206) dudit commutateur (204) et configurée pour recevoir ladite poignée de manœuvre (208) insérée à l'intérieur;
- une deuxième ouverture passante (231) pourvue d'une deuxième douille tournante (232) reliée auxdits deuxièmes moyens d'entraînement (207) dudit sectionneur (202) et configurée pour recevoir ladite poignée de manœuvre (208) insérée à l'intérieur,
où des moyens de fermeture sélectifs sont prévus, qui sont indiqués pour fermer sélectivement lesdites ouvertures passantes (229; 231) et configurés pour fermer ladite deuxième ouverture passante (231) et empêcher que ledit sectionneur (202) soit manœuvré quand ladite première ouverture passante (229) est ouverte et pour fermer ladite première ouverture passante (229) et empêcher que ledit commutateur (204) soit manœuvré quand ladite deuxième ouverture passante (231) est ouverte.

13. Unité centrale (200) selon la revendication 12, **caractérisée en ce que** lesdits premiers moyens d'entraînement (206) dudit commutateur (204) comprennent un arbre de manœuvre (233) reliant ladite première douille tournante (230) audit commutateur (204).

14. Unité centrale (200) selon la revendication 12 ou 13, **caractérisée en ce que** lesdits deuxièmes moyens d'entraînement (207) comprennent un pignon (234) associé à ladite deuxième douille tournante (232) et configuré pour s'engrener avec une crémaillère (235) appartenant à ladite saillie galbée (212), ledit pignon (234) et ladite crémaillère (235) étant configurés pour déplacer de manière coulissante ladite saillie galbée (212) le long dudit logement galbé (211).

15. Unité centrale (200) selon l'une quelconque des revendications 1 ou de 9 à 14, **caractérisée en ce que** lesdits éléments de connexion (203) comprennent une fiche multipolaire/prise multipolaire (236) configurée pour être couplée à une prise multipolaire/fiche multipolaire correspondante connectée électriquement audit réseau d'alimentation électrique.
